# EUROPEAN PATENT APPLICATION

(11) **EP 2 165 991 A2**
(43) Date of publication of application: **24.03.2010**
(21) Application number: 09169851.4
(22) Date of filing: 09.09.2009
(51) Int. Cl.: C04B 35/80, C04B 35/447

(54) **Rare earth phosphate bonded ceramics**

(30) Priority: 17.09.2008 US 232432
(71) Applicant: General Electric Company, Schenectady, NY 12345 (US)
(72) Inventor: Meschter, Peter Joel, Niskayuna, NY 12309 (US)
(74) Representative: Szary, Anne Catherine

(57) **Abstract**

An oxide/oxide CMC matrix comprising a rare earth phosphate bonding agent incorporated in the matrix, an insulating layer on the matrix, or both.

## Description

The present invention relates to rare earth phosphate containing ceramics. More particularly, the invention relates to a rare earth phosphate bonded oxide/oxide ceramic matrix composite (CMC) suitable for use in gas turbine or jet engine components, such as cornbustor liners, transition pieces, vanes (nozzles), blades (buckets), and abradable tip seals.

### BACKGROUND OF THE INVENTION

Existing oxide/oxide ceramic matrix composites (CMC's) generally consist of aluminosilicate reinforcing fibers (e.g., Nextel AS-N720 fibers) or alumina reinforcing fibers (e.g., Nextel A-N720 fibers) incorporated into an aluminosilicate matrix. The composite may also contain a fiber coating to provide a fiber/matrix interface with controlled energy-absorbing properties, e.g. matrix microcrack diversion by the reinforcing fibers. The application temperature of these oxide/oxide CMC's is limited to <1100-1200°C by fiber strength degradation. In addition, exposure of oxide/oxide CMC's to water vapor-containing combustion gases, e.g. in gas turbines or jet engines, causes strength degradation at even lower temperatures by volatilization of the silica components of the fibers and matrix.

To address these problems, a hybrid oxide/oxide CMC system has been developed that consists of the CMC, an insulating layer disposed over the CMC (for example, a friable graded insulation - FGI), and an optional protective coating overlying the insulating layer. The insulating layer (e.g., FGI) generally consists of an assemblage of hollow spheres (e.g., mullite, alumina, or zirconia); an oxide particulate filler (mullite, alumina, zirconia, rare earth oxides, etc.); and a bonding material that is preferably aluminum phosphate (AlPO₄). The protective coating consists of materials that resist interaction with water vapor at high temperatures, e.g. alumina or xenotime phase rare earth phosphates.

Numerous patents have issued on the hybrid oxide/oxide CMC system. Patents on the insulating layer, processing of the insulating layer, and turbine components including the insulating layer include, for example, U.S. patents 6,013,592, 6,197,424, 6,235,370, 6,287,511, 6,641,907, 6,846,574, 6,884,384, 6,977,060, 7,067,181 and 7,198,462. Patents on the hybrid oxide/oxide system include U.S. patents 6,733,907 and 6,984,277. Patents on a protective overlayer for the hybrid oxide/oxide CMC system include U.S. patents 6,929,852 and 7,001,679. U.S. patent 7,001,679 describes xenotime rare earth phosphates as protective coatings that are resistant to water vapor attack at high temperatures in gas turbine components.

A problem associated with the hybrid xide/oxide CMC system is poor resistance to degradation by water vapor in high temperature combustion gases. This problem persists even when an insulation (e.g. FGI) layer and a protective coating are employed. The mullite and AlPO₄ components of the FGI layer have poor water vapor resistance even at 1100-1200°C, much less at the projected material surface temperatures of 1400-1600°C envisioned for advanced engine environments.

An Al₂O₃ protective coating is not likely to be adequately protective in engine applications at surface temperatures >1300°C. A xenotime rare earth phosphate (REPO₄) coating (e.g., YPO₄) may be protective to 1400°C, but rare earth phosphate coatings typically have a coefficient of thermal expansion (CTE) of 6.2 x 10⁻⁶ 1/C and thus are CTE matched only to mullite-rich FGI's and not to FGI's containing substantial amounts of Al₂O₃, ZrO₂ or rare earth oxides, which possess higher water vapor degradation resistance.

The use of phosphates as cementitious materials, and the processing of AlPO₄ and other phosphates by various methods as bonding agents, is known. In particular, a sol-gel process has been described that may allow rare earth phosphates to be used as bonding agents for fibers or particulates (Y. Guo, P. Woznicki, A. Barkatt, E. Saad, and I. Talmy, Journal of Materials Research 11(3), 639-649 (1996)).

A need exists for an improved oxide/oxide CMC system which exhibits high temperature water vapor degradation resistance, while maintaining the thermal barrier properties of the FGI and the mechanical properties of the underlying CMC, and which also possesses relatively easy and inexpensive processability of the constituents. The present invention seeks to satisfy that need.

### BRIEF DESCRIPTION OF THE INVENTION

In one aspect, the invention provides an oxide/oxide CMC matrix comprising a rare earth phosphate bonding agent incorporated in the matrix.

In another aspect, the invention provides an oxide/oxide CMC matrix having an insulating layer (e.g., FGI) wherein the insulating layer comprises a rare earth phosphate bonding agent.

In a further aspect, the invention provides an oxide/oxide CMC matrix having an insulating layer wherein a rare earth phosphate bonding agent is present in the matrix and in the insulating layer.

The invention also provides an oxide/oxide CMC matrix wherein a rare earth phosphate bonding agent is present in the matrix optionally in the presence of an aluminosilicate bonding agent in the matrix.

The invention further provides an oxide/oxide CMC matrix wherein a rare earth phosphate bonding agent is present in the matrix optionally in the presence of an aluminosilicate bonding agent in the matrix and wherein an insulating layer is present which comprises a rare earth phosphate bonding agent optionally in the presence of AlPO₄.

In another aspect, the invention provides an oxide/oxide CMC matrix optionally having an insulating layer and comprising a rare earth phosphate bonding agent optionally with a coefficient of thermal expansion (CTE)filler present in an amount sufficient to match the CTE of other components present in the composite.

The invention also provides an oxide/oxide CMC matrix comprising a compound selected from the group consisting of ZrO₂, HfO₂, and a rare earth oxide incorporated into the matrix.

The invention additionally provides a process for the preparation of an oxide/oxide CMC, comprising incorporating a rare earth phosphate as a bonding agent in the oxide/oxide CMC matrix optionally in the presence of an aluminosilicate bonding agent. In one embodiment, sol gel processing may be employed to produce microcrystalline rare earth phosphates, for instance by dissolving a rare earth chloride in ethanol, adding a stoichiometric amount of H₃PO₄, and applying ultrasonic vibration to produce a sol that can be mixed with other components of the matrix of an oxide/oxide CMC and densified by appropriate sintering. The use of a similar process to bond Al₂O₃-ZrO₂ refractories has been demonstrated (S. A. Suvorov, I. A. Turkin, E. V. Sokhovich, and I. P. Chuguntseva, Ogneupory #4, 7-9 (1983))

In a yet further aspect, there is provided a process for preparation of an oxide/oxide CMC comprising incorporating a rare earth phosphate as a bonding agent in an insulating layer of the oxide/oxide CMC matrix optionally in the presence of AlPO₄ in the insulating layer.

### DETAILED DESCRIPTION OF THE INVENTION

The invention provides an oxide/oxide CMC matrix comprising a rare earth phosphate bonding agent incorporated in the matrix. The presence of the rare earth phosphate in the ceramic matrix results in the composite exhibiting high water vapor degradation resistance, as compared to the water degradation resistance of a composite that does not have a rare earth phosphate incorporated in the matrix.

The rare earth phosphate is generally incorporated in the matrix in an amount of about 5-50 volume %, and preferably in an amount of about 10-30 or 20-40 volume %. The amount employed will depend, for example, on the desired amounts of matrix species to be cemented and the desired volume % porosity in the matrix.

The oxide/oxide CMC matrix may optionally be provided with an insulating layer that may itself comprise a rare earth phosphate bonding agent. The rare earth phosphate may be present in the matrix, in the insulating layer, or in both. In this embodiment, the rare earth phosphate is typically incorporated in the matrix in an amount of about 5-50 volume %, preferably in an amount of about 10-30 or 20-40 volume %, and in the insulating layer in an amount of about 5-50 volume %, preferably about 30 ± 10 volume %.

An aluminosilicate bonding agent typically employed as a bonding agent in prior matrices may also be optionally present in the matrix of the present invention along with the rare earth phosphate bonding agent. In addition, AlPO₄, which is typically employed as a bonding agent in insulating layers of prior composites, may also be optionally present in the insulating layer along with the rare earth phosphate in the insulating layer. In this embodiment, the aluminosilicate bonding agent is typically present in an amount of about 5-50 volume %, for example about 10-30 volume %, and the AlPO₄ is typically present in the insulating layer in an amount of about 5-50 volume %, for example about 10-30 volume %.

According to the invention, the rare earth phosphate is incorporated into the structure of the CMC and of the insulating (e.g., FGI) layer. The expression "incorporated into the structure" as used herein means that the grains of rare earth phosphate binder are intimately mixed on a microstructural scale with grains of other components of the CMC matrix (e.g., Al₂O₃, ZrO₂, HfO₂, aluminosilicates, rare earth oxides, etc.); individual reinforcing fibers of the CMC; or oxide constituents (e.g., mullite, Al₂O₃, ZrO₂, rare earth oxides, etc.) and porous microspheres of an insulating (e.g., FGI) layer.

For the rare earth phosphate to be incorporated into the structure of the CMC or insulating layer, it is necessary that the rare earth phosphate be processable as at least a bonding agent for the CMC matrix, in conjunction with other water vapor resistant materials, typically in place of or in the absence of silica. In the insulating layer (e.g., FGI), the rare earth phosphates are processable as bonding agents for the FGI in place of or in the absence of AlPO₄.

Examples of rare earth phosphates incorporated into the structures of the CMC and FGI are xenotime and monazite phosphates. Xenotime phosphates (e.g., HoPO4, ErP04, TmP04, YbP04, LuPO4, YP04, ScPO4) have the tetragonal zircon crystal structure. Monazite phosphates (e.g., LaP04, CeP04, PrP04, NdP04, SmP04, EuPO4) have a monoclinic crystal structure. The phosphates DyP04, TbP04, and GdP04 have the monoclinic monazite crystal structure at lower temperatures and the tetragonal xenotime crystal structure at higher temperatures.

More particularly, the rare earth phosphate bonding material is selected from the group consisting of a monazite crystal structure orthophosphate (REPO₄); a xenotime crystal structure orthophosphate (REP04); a mixture of monazite and xenotime rare earth orthophosphates; a phosphate in which the RE:P molar ratio is > 1:1; a mixture of phosphates of different crystal structures and rare earths wherein the RE:P molar ratio is greater than or equal to 1:1; and single-phase solid solutions of rare earth phosphates.

The xenotime and monazite phosphates provide good water vapor degradation resistance. In addition, they afford process flexibility to facilitate fabrication of a superior oxide/oxide CMC product at reasonable cost.

In a further aspect, CTE matching with other components of the hybrid oxide/oxide system can be achieved by suitably mixing e.g. xenotime rare earth phosphates (CTE about 6 x 10⁻⁶ 1/C) with high-CTE fillers such as zirconia (CTE about 10 x 10⁻⁶ 1/C) to match the CTE of Al₂O₃ fibers or hollow spheres, for instance (CTE about 8 x 10⁻⁶ 1/C). Zirconia has the additional advantage of being highly resistant to high temperature water vapor, and thus the resistance of the CMC or FGI to water vapor in combustion gases is substantially improved by this compositional tailoring. Typically, the CTE filler is present in an amount of 20-80 volume % depending on the desired volume percentages of fibers and oxide matrix fillers in the CMC, and the desired volume percentages of oxide fillers and hollow microspheres in the insulating layer.

Current CMC technology is not suitable for the anticipated material surface temperatures of 1400-1600°C in advanced turbine and jet engine atmospheres owing to volatilization of at least some of the CMC and FGI components by reaction with the water vapor. Incorporation of rare earth phosphates, which have high water vapor resistance, into the CMC or FGI components of the oxide/oxide CMC system according to the present invention provides advantages not realizable in the prior CMC systems.

Important features of the oxide/oxide CMC of the present invention are the presence of one or more rare earth phosphates in the matrix, possibly in conjunction with suitable oxide fillers for CTE matching to Al₂O₃-rich reinforcing fibers, and maintenance of high strength to at least 1100-1200°C, while displaying increased resistance to degradation by water vapor in combustion gases.

The insulating layer coating for an oxide/oxide CMC comprises rare earth phosphates as bonding agents in place of or in addition to the currently used AlPO₄. The insulating layer possesses the properties of low thermal conductivity, dimensional stability, erosion resistance, abradability, and CTE match to the underlying CMC, together with improved resistance of the insulating layer to degradation by water vapor in high temperature combustion gases.

The composite of the invention may also comprise an optional protective coating overlying the insulating layer. This coating is typically fabricated from materials that resist interaction with water vapor at high temperatures, e.g. alumina or xenotime phase rare earth phosphates.

In one embodiment, the oxide-oxide ceramic matrix composite of the invention may comprise a suitable aluminosilicate or alumina fiber, e.g. Nextel 440 or AN720 fiber, and a matrix comprising a rare earth phosphate, e.g. LaPO₄, NdPO₄, or YPO₄. The CMC is processed in such a way that the rare earth phosphate is a bonding material. In one embodiment, the matrix comprising a rare earth phosphate is dense and has a cracking stress attractive for applications, e.g. >150 MPa. The CMC may optionally contain a particulate filler, e.g. Al₂O₃ or a rare earth oxide, in which case the volume fraction of rare earth phosphate is only large enough to bond the filler and reinforcing fibers. In this embodiment, the matrix may have relatively low strength (e.g., < 150 Mpa) and be deliberately microcracked in service.

In a further embodiment, the insulating layer is a friable insulating layer (FGI) which serves as a tailorable thermal and/or environmental barrier coating for an oxide/oxide composite. Typically, the FGI consists of hollow ceramic spheres, a suitable particulate filler, and a rare earth phosphate bonding material.

The hybrid oxide/oxide composite of the invention has several advantages over the prior hybrid oxide/oxide composite technology, which make it particularly suitable for use as a structural material in gas turbine or jet engine components such as for example combustor liners, transition pieces, vanes (nozzles), blades (buckets) and abradable tip seals. These advantages include: low cost (relative to SiC/SiC composites) and inherent compatibility with oxidizing combustion atmospheres. In particular, the prior technology is not suitable for advanced engine applications where surface temperatures are in the region of 1400-1600°C, due to the volatilization of at least some of the CMC and FGI components by reaction with the water vapor.

There are certain materials other than rare earth phosphates that are exceptionally resistant to high temperature water vapor containing combustion atmospheres, e.g. ZrO₂, HfO₂, and rare earth oxides. These materials may also be used in larger amounts in the CMC matrix, the insulating layer, or both, (e.g., 20-50 volume %) to avoid use of rare earth phosphates while maintaining the hybrid oxide/oxide CMC concept. The rare earth phosphates offer the possibility of being cementitious materials in these applications, similar to AlPO₄, if properly processed by sol gel, acid/base precipitation, or other processing routes broadly similar to those known in the art for AlPO4 or aluminosilicates.

A thermodynamic evaluation of the water vapor resistance of rare earth phosphates, in competition with SiO₂, mullite, Al₂O₃, and AlPO₄, has demonstrated the superior water vapor degradation resistance of rare earth phosphates in principle to at least 1400°C and perhaps to even higher temperatures depending on the overall design of the materials system. For instance, the maximum material surface temperature of a CMC component in an advanced jet engine operating at a total pressure P = 40 atm (588 psia) and a fuel:air ratio of 1:40 may be at least 1400 °C (2550 °F). Under these circumstances, a YPO₄-bonded insulating layer, or FGI, containing Y₂O₃ will react with the combustion atmosphere to produce vapor products whose partial pressures are as follows: HPO₃(g), 5.2 x 10⁻⁸ atm, and Y(OH)₃(g), 7.5 x 10⁻⁹ atm. The rate of degradation of the FGI is approximately proportional to these partial pressures. Under the same circumstances, a AlPO₄-bonded insulating layer, or FGI, containing Al₂O₃ will react with the combustion atmosphere to produce vapor products whose partial pressures are as follows: HPO₃(g), 1.5 x 10⁻⁴ atm, and Al(OH)₃, 1.6 x 10⁻⁶ atm. It is readily apparent that the degradation rate of the YPO₄-bonded FGI is at least 1000x slower than that of the AlPO₄-bonded FGI. Further calculations show that the anticipated life of the AlPO₄-bonded FGI is far too short to meet reasonable life requirements in this application, whereas that of the YPO4-bonded FGI meets the requirements.

In summary, the present invention is centered on (1) the incorporation of rare earth phosphates into the structure of oxide/oxide CMC's and/or insulating layers for oxide/oxide CMC's to considerably improve the water vapor degradation resistance in high temperature engine applications; (2) the incorporation of rare earth phosphates into oxide/oxide CMC's and/or insulating layers for oxide/oxide CMC's with other suitable water vapor resistant materials (e.g., ZrO₂, HfO₂, rare earth oxides) to maintain water vapor resistance while assuring a good CTE match to other components of the system such as Al₂O₃ reinforcing fibers; (3) processing of rare earth phosphates as cementitious or bonding materials in oxide/oxide CMC's or insulating layers for such CMC's, to replace aluminosilicate or AlPO₄ bonding materials, which have inferior resistance to degradation by water vapor at high temperatures.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. An oxide/oxide ceramic matrix composite (CMC) matrix comprising a rare earth phosphate bonding agent incorporated in the matrix.

2. The matrix according to claim 1, wherein the oxide/oxide CMC matrix further comprises an insulating layer.

3. The matrix according to claim 1 or claim 2, wherein the insulating layer comprises a rare earth phosphate bonding agent incorporated into said layer.

4. The matrix according to any preceding claim, wherein an aluminosilicate bonding agent is present in the matrix.

5. The matrix according to any one of claims 2 to 4, wherein AlPO₄ is present in the insulating layer.

6. The matrix according to any preceding claim, and further comprising a coefficient of thermal expansion (CTE) filler to match the CTE of other components present in the composite.

7. The matrix according to any preceding claim, wherein the rare earth phosphate is selected from the group consisting of xenotime (tetragonal crystal structure) and monazite (monoclinic crystal structure) orthophosphates of general formula REPO₄, where RE = Sc, Y, or one of La-Lu in the Periodic Table, or mixtures thereof.

8. The matrix according to any one of claims 1 to 6, wherein the rare earth phosphate is selected from the group consisting of:
a xenotime crystal structure orthophosphate (REPO₄);
a monazite crystal structure orthophosphate (REPO₄);
a mixture of monazite and xenotime rare earth orthophosphates;
a phosphate in which the RE:P molar ratio is > 1:1;
a mixture of phosphates of different crystal structures and rare earths wherein the RE:P molar ratio is greater than or equal to 1:1; and
single-phase solid solutions of rare earth phosphates.

9. The matrix according to any preceding claim, wherein the rare earth phosphate bonding agent is present in the matrix in an amount of about 5-50 volume %.

10. An oxide/oxide CMC matrix comprising a compound selected from the group consisting of ZrO₂, HfO₂, and a rare earth oxide incorporated into the matrix.

11. A process for preparing an oxide/oxide CMC comprising incorporating a rare earth phosphate as a bonding agent in the oxide/oxide CMC matrix.

12. The process according to claim 11, wherein aluminosilicate bonding agent is present in the matrix.

13. The process according to claim 11 or claim 12, wherein an insulating layer is present and a rare earth phosphate bonding agent is incorporated into said layer.

14. The process according to claim 13, wherein AlPO₄ is present in the insulating layer.

15. The process according to any of claims 11 to 14, wherein the rare earth phosphate is selected from the group consisting of xenotime rare earth orthophosphates (REP04) and monazite rare earth orthophosphates (REP04), or mixtures thereof.
